# EUROPEAN PATENT APPLICATION

(11) **EP 4 478 268 A1**
(43) Date of publication of application: **18.12.2024**
(21) Application number: 24162512.8
(22) Date of filing: 08.03.2024
(51) Int. Cl.: G06Q 10/06, G06Q 30/06, G06Q 50/06, G06Q 50/40, B64D 37/14

(54) **METHOD AND DECISION TOOL FOR TRACKING SUSTAINABLE AVIATION FUEL USAGE AND EMISSIONS**

(30) Priority: 12.06.2023 US 202318333005
(71) Applicant: General Electric Company, Schenectady, NY 12345 (US)
(72) Inventor: ZHANG, Feng, Schenectady, 12345 (US); KHAN, KMK Genghis, Schenectady, 12345 (US); MORELLO, Joanne, Schenectady, 12345 (US); SUN, Changjie, Schenectady, 12345 (US); KIRTLEY, Jieun, Schenectady, 12345 (US)
(74) Representative: Openshaw & Co.

(57) **Abstract**

A method (100) and a decision tool (52) for modeling emissions for a sustainable aircraft fuel (SAF) for the lifecycle of the fuel. The decision tool (52) includes a controller module (54) configured to receive data related to at least one fuel pathway (60, 62, 64) for the fuel wherein the fuel pathway (60, 62, 64) considers emissions from initial feedstock production (70) to fuel burn during flight (92) and arrival (94). The decision tool (52) determines at least one fuel pathway (60, 62, 64) for the fuel used to fuel the aircraft (20) during a flight, models an emission score for the at least one fuel production, and then outputs the emission score where a user can purchase the fuel or make other decisions based upon the fuel pathway (60, 62, 64) provided by the decision tool (32).

## Description

### TECHNICAL FIELD

The present subject matter relates generally to a system and method for determining and managing sustainable aircraft fuel usage and to a tool for evaluating emissions and related cost.

### BACKGROUND

There is a need for a reduction in emissions and greenhouse gases. In the United States, a target goal of 20% lower emissions by 2030 has been set, while having a goal of achieving net zero emissions by 2050. Fuel cost and emission impact can be measured by flight. However, such a measurement fails to account for a full emission footprint which can be specific to an individual fuel or mixture thereof.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of a system for providing a sustainable aircraft fuel (SAF) for an aircraft, and a network in communication with the system, in accordance with aspects of the present disclosure.
FIG. 2 is a schematic view of a closed loop SAF lifecycle utilizing the SAF of FIG. 1, in accordance with aspects of the present disclosure.
FIG. 3 is a flow chart illustrating a SAF production and use system, in accordance with aspects of the present disclosure.
FIG. 4 is a flow chart illustrating a method of determining an emission score for an aircraft using a SAF, in accordance with aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure. While the aspects described herein relate to an aircraft turbine implementation, it should be appreciated that the aspects can be applied to non-aircraft environments, such as ground-based, marine, or terrestrial systems, engines, or fuels in non-limiting examples. Similarly, while the discussion is generally toward a single aircraft, it should be appreciated that the aspects can apply across a fleet of aircraft, and need not be specific to a single aircraft use.

Aspects of the disclosure generally relate to a fuel production system and tool for measuring emissions or carbon impact for a sustainable aircraft fuel (SAF) from production to use within an aircraft to complete flight. Businesses and nations have set ambitious target goals of lowering greenhouse gases and emissions by 2030 and 2050. Costs and carbon credits have created a need to closely and carefully monitor fuel costs from initial production to usage. The tool can be utilized to generate Contractual Service Agreements (CSAs), such as with the airline or end customer for the SAF. These CSAs can provide management of risk and cost associated with SAFs and emissions, as well as include prices, amounts, locations, and other terms or information for a SAF purchase.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

A "set" or a set of elements as used herein can include any number of said elements, including one. The singular forms "a", "an", and "the" include plural references unless the context clearly dictates otherwise.

Additionally, as used herein, a "controller" or "controller module" can include a component configured or adapted to provide instruction, control, operation, or any form of communication for operable components to affect the operation thereof. A controller module can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller module can also include a data storage component accessible by the processor, including memory, whether transient, volatile or non-transient, or non-volatile memory.

Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a control module can include comparing a first value with a second value, and operating or controlling operations of additional components based on the satisfying of that comparison. For example, when a sensed, measured, or provided value is compared with another value, including a stored or predetermined value, the satisfaction of that comparison can result in actions, functions, or operations controllable by the controller module. It will be understood that such a determination may easily be altered to be satisfied by a positive/negative comparison or a true/false comparison. Example comparisons can include comparing a sensed or measured value to a threshold value or threshold value range.

The standard practice for determining emissions has been to determine fuel usage relative to standard emissions values per volume or mass of such fuel being used. However, this fails to account for the total emissions required in preparing the fuel for usage, transport and distribution, and other required factors. Therefore, a more intuitive solution is needed, with a greater ability to account for the entire footprint for the fuel cost, and an ability to present this information to airlines, consumers, fuel distributors, governments, and retailers in real time, such as through a Contractual Service Agreement (CSA) or through fuel transaction. The inventors' practice has proceeded in the manner of designing a system and method that is suitable for use with existing systems and infrastructure, while improving accuracy of emissions and value for the use of a fuel.

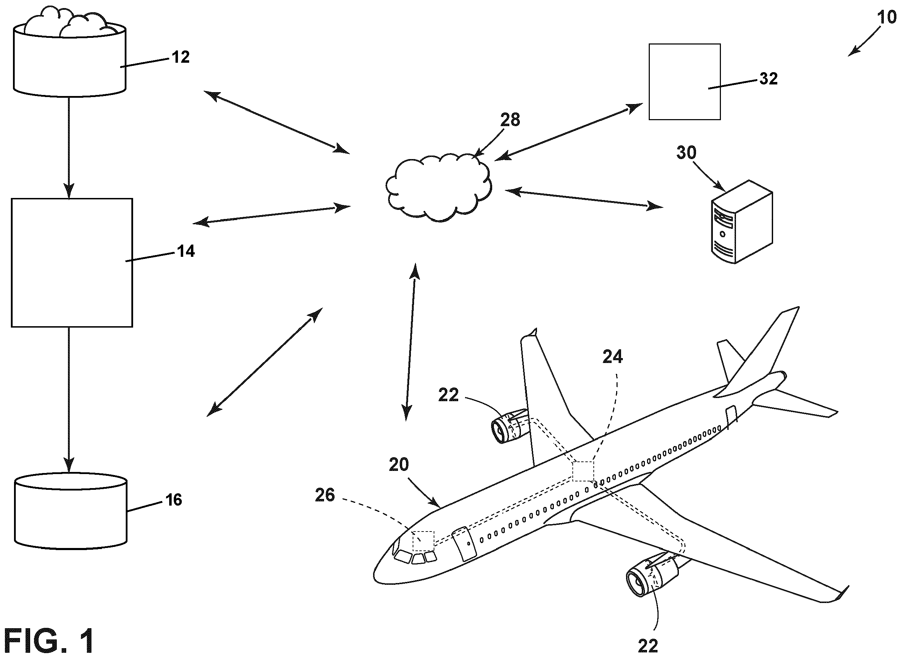

It will be understood that while aspects of the disclosure are shown in an aircraft environment of FIG. 1, the disclosure is not so limited and has general application to electrical power systems in non-aircraft applications, such as other mobile applications and non-mobile industrial, commercial, and residential applications. For example, while this description is directed toward a system architecture in an aircraft, aspects of the disclosure can be further applicable to non-aircraft implementations, such as terrestrial, aquatic, or other fuel-driven systems. It will be understood that the illustrated aspects of the disclosure are only one non-limiting example of an aircraft, and many other possible aspects and configurations in addition to that shown are contemplated by the present disclosure.

The disclosure herein includes a tool or system to determine, evaluate, select, or offer SAF fuels based on determining airline SAF usage versus SAF production pathway selection. This system or tool can present emission footprint management services to airline customers, such as presented as a Contractual Service Agreement (CSA) and a transactional arrangement for non-CSA customers or users. While this disclosure focuses on SAFs, it should be understood that this disclosure can utilize or consider other greenhouse gases, such as water vapor or contrails in non-limiting examples. Additionally, the disclosure can be used to predict and forecast SAF supply, price, availability, demand, use or consumption, reduce risk management, and reduce overall fleet emissions. This information can be provided to the end customer, permitting the end customer to manage climate risk or emissions.

FIG. 1 schematically shows a system 10 for fuel production and use for sustainable aircraft fuels (SAFs) for completion of a flight between a departing airport and a destination airport. SAFs are fuels made from sustainable resources of feedstocks and can be added or used with fossil fuels to reduce overall emissions. A SAF can be a fuel made from the sustainable resources, or can be a fuel mixture including a SAF added to a fossil fuel or other non-SAF fuel.

Fuel production begins with production or gathering of raw materials 12, such as mining, growing, or extracting raw materials 12 as a feedstock. Raw materials can be crude oil, coal, natural gas, or crops, in non-limiting examples. After production, the raw materials 12 can be processed at a processing plant or processor 14 as may be necessary due to the crude properties of the raw materials 12. After processing by the processor 14, a SAF 16 is produced. The SAF 16 can be provided to an aircraft 20 in a fuel tank 24 to fuel aircraft flight, for example. The aircraft 20 can include one or more engines 22. The engines 22 combust the SAF 16 in order to produce thrust to drive the aircraft 20. The aircraft 20 can further include an avionics system 26 for operating and electronically communicating within the aircraft 20, with the engines 22, and remote from the aircraft 20, such as with a transceiver. The avionics system 26 can be communicatively or operatively coupled to the engines 22 to make measurements of the engine 22, such as fuel consumption, cycle speed, or temperature in non-limiting examples. The avionics system 26 can be used to measure or record flight information, such as the engine speed or engine cycle in non-limiting examples, as well as flight-specific information, such as flight path, flight speed, or environment.

A network 28 and a database 30 can be communicatively coupled to the aircraft 20 and the avionics system 26, as well as the systems used to collect the raw materials 12, process the raw materials with the processor 14, and producing or transporting the SAF 16. The network 28 can provide for recording, generating, and analyzing data or information provided from the aircraft 20 or avionics system 26, as well as the other portions of the system 10, in real time. The data or information can be shared and communicated among multiple aircraft 20, as well as airports 32 or ground communication stations like control towers or air traffic control. For example, the airports 32 can be a departing airport and/or a destination airport for a particular aircraft 20 or flight mission. Alternative ground communication stations, in non-limiting examples, can include fuel stations, aircraft hangers for storage, maintenance or inspection, or a central hub. The network 28, database 30, and airport 32 can provide real time information to the aircraft 20 in order to make real time cost and usage determinations for the aircraft 20 during flight.

One way to measure a flight cost and fuel usage is with carbon credits or other emission or greenhouse gas credits. Carbon credits are often in the form of a permit purchased or provided from one organization to another, like from a government to a business, and provide a certain allowance of emissions. In many situations, where the full allowance of emissions is not used, the remaining emissions or carbon credits therefore can be sold or traded. In this way, there is a market value for emissions based on the value of the credits, to permit pollution by weight or volume, at cost determined by the price of the credits. In another example, the emissions can be measured based on a carbon intensity score, which can be a representation of emissions versus energy consumed.

In an additional example, many governments, entities, or locales offer tax credits for green businesses, where such businesses pollute below a certain threshold, or take action toward carbon neutrality. Specifically, variations in regional policy worldwide can change based on region, where a flight or SAF can operate within multiple regions, and therefore, multiple policies. Therefore, it would be desirable to accurately measure the amount of pollutant associated with utilizing a SAF in order to set environmental or financial goals in line with potential tax credits. Such goals can be specific to a region or government, or combination of regions and governments. Furthermore, it can be important to know location, as certain regions or governments may offer different or greater tax credits to airlines using SAFs, but only when operating within certain geographical areas.

Therefore, it is desirable to accurately measure the cost of emissions in real time in order to make real time business decisions on the purchase, preparation, movement, and use of fuel, while considering emissions from both a financial and pollutant standpoint.

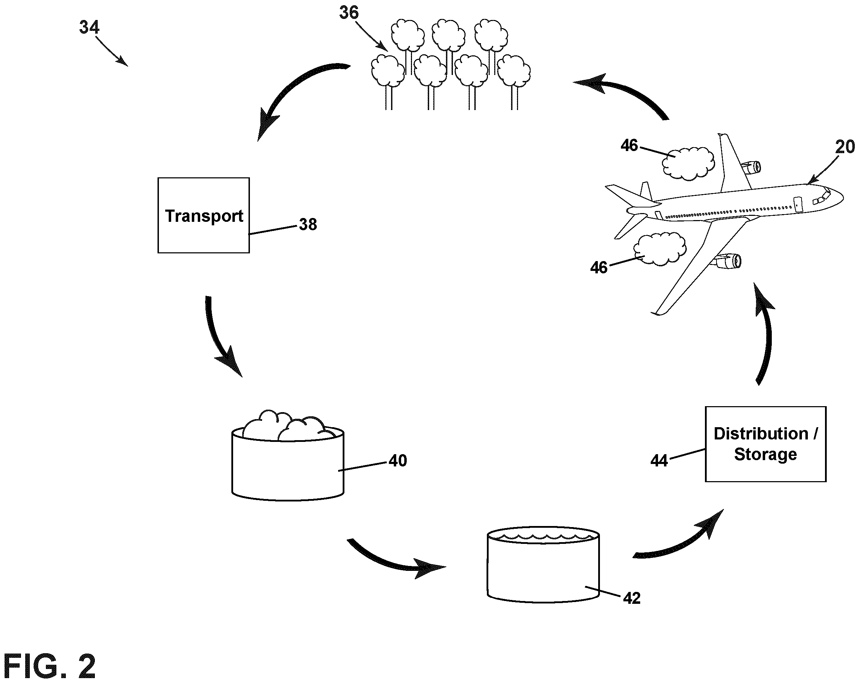

Referring to FIG. 2, a closed loop SAF lifecycle 34 illustrates a lifecycle for production and use of the SAF. A feedstock, such as a biomass feedstock 36, can be grown or otherwise produced, gathered, created. The biomass feedstock 36 is harvested or collected and a transport 38 transports the biomass feedstock 36 to processing 40. At processing 40, the biomass feedstock 36 can be processed, such as drying or sorting, or processing in a reactor, in non-limiting examples, or otherwise prepared for refinement at refining 42. The biomass feedstock 36 is refined at refining 42, rendering the biomass feedstock 36 as a usable SAF fuel. The SAF fuel can then be stored or distributed at distribution / storage 44, such as at a fueling station or airport 32 (FIG. 1). The SAF fuel is provided to the aircraft 20, where the aircraft 20 uses the fuel for flight. During usage and flight, carbon emissions 46, such as carbon dioxide, are produced and emitted from the aircraft 20. The carbon emissions 46 are used by the biomass feedstock 36 in regrowing or reproducing the biomass feedstock 36. The carbon emissions 46 utilized by the biomass feedstock 36 completes the closed-loop system, providing a sustainable model for production of the SAFs.

SAFs utilize sustainable feedstocks, like the biomass feedstock 36, which can utilize or offset carbon emissions 46, or other emission types, in order to form the closed-loop system. The closed loop system provides for sustainability for the fuel, which provides an overall reduction in emissions through utilization of the carbon emissions 46 emitted through use of the fuel.

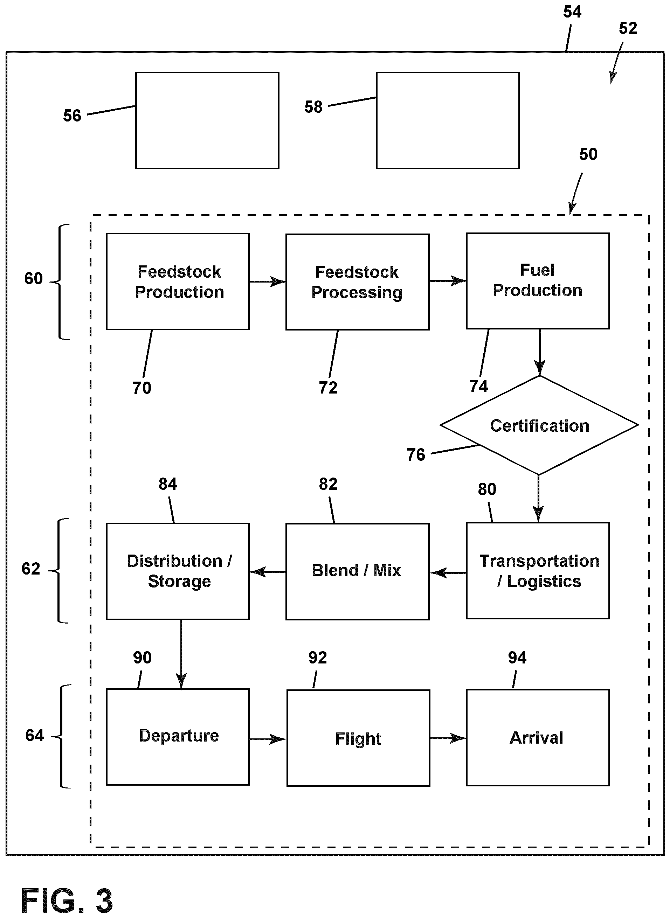

Referring to FIG. 3, a system 50 is provided as a decision tool 52 to evaluate and adopt different fuel pathways based on an emission score determined for a sustainable aircraft fuel (SAF). The emission score can be representative of a monetary cost, an emission, or combination thereof specific to the SAF. A monetary cost for the emission score can be the price at which a SAF is purchased, the prices at which a feedstock is produced or sold, or a price required to perform a portion of the system 50, and can be measured in terms of price by weight or volume of the material used or fuel produced, for example.

The emissions can be a measurement of pollutants released by creation, preparation, or use of the SAF, and can be measured in terms of weight or volume. For example, particulate pollutants can be measured in weight, while gaseous form pollutants can be measured by terms of weight or volume. In another example, the emissions can be expressed in grams of pollutant per unit distance traveled by the aircraft. In yet another example, the emissions can be a carbon cost, measuring the amount of carbon emitted due to the use, preparation, or consumption of fossil fuels or other production, and the emissions can be a carbon footprint, represented as mass of carbon dioxide emitted per unit time. In yet another example, the emissions can measure carbon intensity. The emissions or carbon intensity need not be limited to carbon only, however, and can be a measure of total emissions, including but not limited to carbon, carbon dioxide, methane, nitrous oxide, hydrofluorocarbons, perfluorocarbons, fluorinated emissions, or other greenhouse gases.

In this way, it should be understood that the decision tool 52 can provide for determining an emission score for a specific or particular type of emission, fuel, or combination thereof. Therefore, the emission score can describe either or both of the monetary and pollutant value of purchasing or using a SAF. The emission score can be utilized by the decision tool 52 to determine the value or cost of purchasing or using a SAF in real time, while considering the entire lifecycle of the SAF.

As shown, the system 50 can be controllably implemented or enabled by way of a controller module 54 having a processor 56 and memory 58. In one non-limiting example, the controller module 54 can include, or can be incorporated into the decision tool 52, as described herein. The decision tool 52 can be configured to receive data or information related to the SAFs, and utilize the data or information to prepare or determine the emission score. The decision tool 52 provides for making real-time decisions based upon the emission score, and can provide for decisions that are fleet-wide or relating to multiple vehicles using a SAF. For example, the decision tool 52 can be in the form of a program or software such as that provided on the controller module 54 for storing and executing such a program or software. Such a tool can be utilized by governments, airlines, fuel companies, and businesses, in order to closely monitor or manage emissions and climate risk, as well as evaluate the economics or viabilities of adopting different sustainable fuel pathways represented within the system 50. Further, the decision tool 52 can permit determination or projection of SAF costs for using or purchasing certain SAFs, against emissions for such use or purchase. It is desirable for businesses or organizations to be able to readily determine or predict the monetary cost, emissions, carbon footprint, credit requirement, or cost thereof, associated with individual SAFs or flights, across a wide variety of factors contributing to that monetary cost or emissions, while considering multiple simultaneous flights in real time. In another non-limiting example, the system 50 can be controllably implemented or enabled in response to a request, such as a request for a monetary cost or an emission by a user. The user or end customer can be an airline or similar business, for example, or a SAF retailer or airport 32 (FIG. 1) which supplies fuel to aircraft, in non-limiting examples. In further non-limiting examples of the disclosure, the decision tool 52, or a controller module 54 thereof, can be further configured to predict the emission score for a SAF at a particular price or having a particular composition, to predict a monetary cost for a SAF relative to emissions produced, and the emission score for aircraft flight in operation among up to a fleet of aircraft. Non-limiting examples of the emission score can further include detailed breakdown of emissions or related cost based on a particular fuel pathway to provide flexibility in scheduling, prediction or estimation.

The system 50 can be separated into different production pathways, with each SAF defining an individual production pathway. Each SAF production pathway can include an upstream portion 60, a downstream portion 62, and an aircraft flight portion 64. The upstream portion 60 can include feedstock production 70, feedstock processing 72, and SAF production 74, the downstream portion 62 can include transportation and logistics 80, blending or mixing 82, and distribution and storage 84, and the aircraft flight portion 64 can include departure 90, flight 92, and arrival 94.

The feedstock production 70 can include raw material production or extraction, such as an animal, biomass, oil, vegetation, air, liquid, or water in non-limiting examples. Such a production can include planting, growing, cultivating, harvesting, drying, sorting, and regrowth, or other required steps in non-limiting biomass examples. Additionally, power-to-liquid feedstocks are contemplated, such as renewable electricity, water, or carbon, for example. Additional non-limiting examples of feedstock production 70 can include gathering or producing crude or raw materials, such as crude oil, coal, natural gas, or other fossil fuels, corn, soybeans, or other biomass, biofuels or renewable fuels, or can include alternative fuels, such as hydrogen fuels, which can be produced from other raw materials, such as water. Growing, collecting, gathering, or otherwise preparing feedstock for eventual SAF production contributes to the emission score. For example, farm machinery used to plant and grow biomass feedstocks burn fuels and produce emissions in order to produce the feedstock. These emissions contribute to the overall emission score required in operating an aircraft that burns a fuel at least partially created with the feedstock produced from feedstock production 70. Additionally, it is contemplated that feedstock production 70 can include electrical energy, such as battery-stored energy, as hybrid aircraft using a mixture of electrical and chemical energy are within the scope of this disclosure.

The emission score for the feedstock production 70 can include the total emissions required for production of the particular feedstock. The total emissions can be dependent on the type of feedstock. For example, where the feedstock is biomass, such as corn or soybean, the total emissions for preparing, planting, and growing such biomass are included in the emission score. For example, preparing the land, such as plowing or tilling, often requires machinery operated by fossil fuels. The emission score can include the use of these fossil fuels to operate said machinery, as well as the footprint required for manufacture of said machinery. Furthermore, the land may be treated prior to or after planting of crops, such as with nitrogen. The emission score can include the nitrogen utilized to prepare the land, which can contribute to the emission score. Planting can include the fossil fuel costs to load and operate the plating machinery, for example. Watering crops can require transporting non-local water, which contributes to the emission score. The crops may further require treatment, such as chemicals utilized in insect deterrence, plant feeding, or weed deterrence, require contributes to the emission score to produce and apply to the crops. All of these considerations, as well as any other requirement adding to the emission score, can be included in defining the emission score for feedstock production 70.

In another example, where the feedstock is biomass, such as trash, waste fats, oils, or greases, or renewable, such as eCO₂ and H₂, the emission score can include the emissions of gathering the feedstock, as well as the energy required to perform those aspects. Furthermore, any emission avoidance available or utilized during feedstock gathering can be included in determination of the emission score. Similar considerations can be utilized for other feedstocks, while the particular feedstock may require particular considerations, such as surveying, mining, drilling, as well as the cost of extraction of the particular material. For example, the cost of extracting hydrogen by weight and energy output is different than the cost of extracting biomass by weight and energy output. The particular feedstock is determinative on the particular emission score, and is specific to the particular feedstock.

The feedstock processing 72 can include processing or refining of the feedstock materials gathered or created during feedstock production 70. For example, biomass crude oil, or other sustainable feedstocks, can be refined or otherwise processed from a raw form into a form capable of SAF production 74. Such processing can include sorting or drying, or other processes specific to biomass feedstocks. Biomass feedstocks like corn or other crops can be processed to form ethanol from corn oils. Feedstock processing 72 can further include preparation of biomaterials for the creation of a biodiesel fuel at SAF production 74. Processing of the feedstocks also requires machinery and operations which have an energy cost which contributes to the emission score.

The emission score for the feedstock processing 72 can include the total emissions required for processing of the particular feedstock or a mixture of feedstocks. The emission score can be dependent on the type of feedstock, or the particular desired processing. For example, the emission score of processing biomass is different than that of processing hydrogen. Regardless of the feedstock material, processing type, or otherwise, processing of the feedstock contributes to the overall emission score in preparing of the SAFs for use in the flight.

At SAF production 74, the processed feedstock from the feedstock processing 72 can be produced as a SAF, such as the SAF 16 used to drive the engine 22 (FIG. 1). SAF production 74 can include the production of gasoline or other engine fuels from fossil fuels such as crude oil. Ethanol, biofuels, renewable diesel, SAFs, renewable gasoline, or biodiesel fuels can be produced from biomass of other processed feedstocks, and can qualify as renewable materials, which may contribute to the use of carbon credits. The SAF production 74 emission score is determined by the cost and emissions required to produce the SAF from the feedstock. Additionally, there may be waste from the SAF production 74 which requires disposal, where such disposal contributes to the emission score.

After SAF production 74, the produced SAF can be certified with certification 76. Certification 76 can include analysis, measurement, or review such that the produced SAF meets certain standards or expectations, often purity or concentration standards. Different SAFs, and production pathways thereof, can be certified in different ways, or based upon different standards, such as different maximum values or thresholds, or differing blend ratios, for example. Certification can vary based upon locale or region, such as government or business. Variations in certification can lead to variations among SAF fuels based upon local certification requirements. The system 50 can consider these variations in determining an emission score, resultant of different certification requirements. Certification of the SAF can be performed by an independent business or entity in order to determine if the fuel meets required industry, government, or environmental standards. Many governments or businesses require SAFs to meet specific standards, and require certification 76 prior to transportation and logistics 80. Certification 76 of the SAFs can contribute to the emission score. There is a cost required with such certification, as measurement, testing, storage during testing, or any other requirement utilized in such certification. Such an additional cost can be monetary and/or emissions, and contributes to the emission score. In one non-limiting example, the SAF may be transported to a certification site where the transportation and movement of fuels contributes to the emission score. Furthermore, while certification 76 is shown positioned between SAF production 74 and transportation and logistics 80, it should be appreciated that the decision tool 52 can perform certification at any point within the system 50, as may be desirable or required to ensure the SAF is meeting standards or requirements throughout production, transport, and use.

Transportation and logistics 80 includes supplying the produced SAF from SAF production 74 to one or more governments, businesses, purchasers, or consumers. For example, the produced SAF at SAF production 74 can be distributed to SAF companies for fueling aircraft 20 (FIG. 1). Alternatively, the SAF can be provided to airports 32 (FIG. 1) or other suitable facilities for storage prior to distribution to the aircraft. The transportation and logistics 80 may not be direct, and can include one or more intermediary distributors, actors, storage, or locations. Distribution of the SAF contributes to the emission score. For example, the SAF, energy, and vehicles required to transport the SAF for distribution contributes to the overall emission score. Non-limiting examples of SAF transportation can include by vehicle, car, truck, boat, train, or aircraft, each of which can contributed to the emission score with their own specific requirements.

At blending or mixing 82, the distributed SAF can be blended or mixed. For example, SAFs can be blended with fossil-based jet fuels or other fuels to form new fuels, which can result an overall reduction in emissions or increased efficiency resultant of the addition of the SAF. Additionally, blending or mixing the fuels can change engine operation through fuel burn, such as burn speed or temperature. Blending or mixing SAFs contributes to the emission score. For example, a SAF blenders tax credit (BTC) can provide for a per-gallon credit or value for SAF fuels blended with fossil-based fuels or other jet fuels. Therefore, it is contemplated that the system 50 considers credits for fuel mixes, and can consider cost offsets based upon credits received for using a SAF BTC qualified fuel mixture. For example, jet fuels can be blended with a SAF to form a SAF blend. Alternatively, the SAF may be a 100% drop-in, which may be utilized without blending with another fuel. In another example, all fuels, including SAFs may be eligible for credits for greenhouse gas reduction performance against a baseline value or factor as a clean fuel production credit. The system 50 can consider the potential to offset fuel costs by incorporating one or more SAFs into a fuel mixture in order to qualify for one or more credits. In this way, it should be understood that the emission score for a mixed or blended SAF can be determined based upon SAFs mixed or blended into the final fuel, and can be done with consideration of requirements needed to receive blending or clean fuel credits. In yet another example, biomass-based diesel has been shown to reduce greenhouse gas emission by between 54-66% as sugarcane ethanol when compared to a petroleum baseline, and the U.S. EPA has approved benefits for fuels having an equivalence value of 1.6 or 1.7. SAF renewable identification number (RIN) can be a 1.6 SAF, for example. The system 50 can consider such values for potential fuel mixes, and offset costs through credits for these mixes. In yet another example, regions have approved Low Carbon Fuel Standards designed to decrease carbon intensity and fossil fuel dependency, and increase air quality. The system 50 can further consider what mixes or amounts of SAFs can be utilized to meet such standards, in order to receive benefits associated with such standards. Furthermore, it should be appreciated that the blending or mixing of the fuels can also contribute to the emission score. There is an energy cost required to mix fuels, as well as any additional processing or production which can be required after mixing or blending. All of these factors contributed to the emission score of blending or mixing SAFs.

In one alternative non-limiting example, such blending or mixing can include additional additives, where the emissions for the particular additive can be included in the total emission score. In one example, the emission score can be prorated by content percentage. In another example, the additive may not be considered as part of the emission score. In another example, the additive can be used to vary or change the emissions generated from use of the SAFs. The system 50 can consider a change in emissions resultant of using additives, and can update the emission score as necessary based upon the use of an additive. While only one blending or mixing is shown, it should be appreciated that multiple blending or mixing can occur, where additional distributions or storage of SAFs intermediate of multiple blending or mixing, all of which further contributes to the emission score. In another example, where a jet fuel is not blended or mixed, the transportation and logistics 80 and the blending or mixing 82 can be skipped, or provide no contribution to the emission score or have no consideration by the decision tool 52. Additionally, it is contemplated that a blended or mixed fuel can be certified, similar to certification 76, prior to distribution and storage 84.

At distribution and storage 84, the blended or mixed SAF can be further distributed to businesses, airports 32 (FIG. 1), governments, or consumers, where such SAFs can be stored for use. Such distribution and storage contribute to the emission score. Storage can include specific requirements or monitoring. For example, highly combustible fuels require specialized storage to ensure safe storage. Such specialized storage can include cooling or other temperature management, sealing to prevent contamination, monitoring, or other specialized equipment. This specialized storage can contribute to the emission score, and can be dependent on the amount of time the SAF is stored. A longer storage period can have a relatively larger impact on the emission score. Preparation and maintenance of storage facilities further contributes to the overall emission score, in addition to distribution of the SAFs prior to such storage.

The aircraft flight portion 64 contributes to the emission score, and specific portions of the aircraft flight portion 64 can have different impact on the emission score. The departure 90 can include, in non-limiting examples, preparations for flight, such as systems check, fuel check and aircraft fueling, maintenance, taxiing the aircraft, passenger boarding, transport material loading, and idle engine operation. In one example, preparation for or during departure, the engines 22 (FIG. 1) are often run at idle or low speeds to provide power to the aircraft in preparation for flight, or to move about the airport area. Running these engines prior to actual flight contributes to the emission score, as there is a cost to prepare the aircraft for departure prior to aircraft flight. In another example, a fuel vehicle can burn fossil fuels to fuel the aircraft. These factors further contribute to the emission score.

The flight 92 can include takeoff, climb, cruise, descent, and landing, in non-limiting examples. Takeoff and landing can include immediate acceleration or deceleration for lift or landing, and can also include runway travel or waiting for turn to take off or land. Climb typically requires maximum or near-maximum engine operation, which burns a relatively larger amount of fuel, and can contribute a relatively larger amount to the emission score, relative to other portions of flight 92. Climb requires generating enough thrust to lift the aircraft into flight, which requires a relatively higher fuel consumption rate than that required to maintain flight (cruise), or to descend. Cruise can operate the engine at a specific speed to generate a specific amount of thrust in order to maintain altitude and flight path. Cruise can further include ascension or descension to different altitudes or other flight path changes relative to real-time updates. For example, weather patterns or other environmental or industry factors can result in a change in flight plan or mission. Changing flight plan or mission can vary fuel usage or region in which fuel usage takes place. The system 50 can consider potential variations to flight plan or mission which may offset costs. For example, different flight paths for multiple aircraft among a fleet of aircraft can be considered in order to reduce costs across the whole fleet. These various flight paths or missions can consider local credits in order to offset costs. Additionally, it is contemplated that the system 50 can receive an instruction for an updated flight path, and the system 50 can consider various potential alternative flight paths in order to offset fuel costs with the use of SAFs and potential credits along the alternative flight paths. Additionally, it should be appreciated that the emission score for a SAF can change in real time. For example, as flight conditions change, or flight mission changes, the average emission score for the SAF can vary during flight. In this way, it should be understood that the emission score for a SAF in use on an aircraft can vary in real time, and that the system 50 ca account for any such variation. Furthermore, such a variation can be created by a change in fuel cost, which can be resultant by economic forces outside of the aircraft or flight, but can still have an impact on an emission score burned by an aircraft in real time.

The flight 92 can further include details about the aircraft itself, such as aircraft type or engine type, flight weight, flight mission, departure and arrival location, and environment. Each of these factors can contribute to the fuel requirement for the flight, contributing to the emission score.

The arrival 94 can be similar to departure 90, but tailored to requirements after completion of flight 92. For example, taxiing the aircraft for passenger or cargo unloading, further maintenance or upkeep required after flight, or other system measurement or review. Fuel is utilized to move the aircraft to a final destination after arrival, as well as for storage or maintenance after arrival, but prior to preparation for another departure. Each of these aspects can require operation of the engines 22, or an energy cost, each of which contributes to the emission score.

The system 50 can therefore define a plurality of fuel pathways, where one fuel pathway is defined by the particulars of each SAF. More specifically, one fuel pathway can include the entire system 50, or a portion thereof, but having details specific to the particular SAF at a particular cost defining an emission score for the SAF during the entire fuel lifecycle. Production pathways can include the upstream portion 60 and the downstream portion 62, while flight pathways can include the aircraft flight portion 64. The combination of the production pathways and the flight pathways can define an emission score for each SAF, thereby defining the plurality of fuel pathways.

In one non-limiting example, feedstock production 70 can include extracting crude oil, which is processed at feedstock processing 72, and produced, at SAF production 74, into a fuel such as gasoline. Extracting, processing and producing the gasoline defines an emission score for the upstream portion 60, and defines one fuel pathway or a portion thereof. An alternative may include where the feedstock production 70 is corn, which is processed at feedstock processing 72 and produced into biofuel, such as ethanol. Growing, harvesting, processing, and producing the ethanol contributes differently to the emission score than that of the crude oil. In this way, it should be understood that within the system 50, a product such as crude oil or corn can vary the emission score, defining an individual fuel pathway, or portion thereof, for the system 50. In another example, the SAF can be blended or mixed 82 with a jet fuel, thereby defining an emission score considering the combination between the two, and that the new SAF created as the mixture of the two defines a new fuel pathway that incorporates both fuels contributing to the blending or mixing 82 of the SAFs. Therefore, it should be understood that multiple different fuel pathways are contemplated, depending on the particulars of the individual elements of the system 50. With such an understanding, it should be appreciated that each individual fuel pathway can include an individual emission score.

The decision tool 52 can provide information specific to the SAF, which permits users to compare SAFs by emission score or another factor. The decision tool 52 further permits the user to make decisions in order to reduce the cost by selecting a SAF, permitting the user to consider costs along the entire lifecycle of the SAF. This way, the decision tool 52 permits the user to reduce monetary cost, thereby maximizing value based upon emissions, determining service risk associated with dynamic changes in policy or cost.

The decision tool 52 can generate or output a contractual service agreement (CSA) permitting the airline, pilot, or other user to ultimately purchase the SAF, which can generate a document or agreement forming the CSA. The CSA can be part of or establish a service program with the purchaser. Such a service program can be used by the airline, aircraft, or other SAF customers in order to manage risks, such as fuel costs, emissions, and provide evidentiary support for claims for emission credits or offsets. Additionally, the decision tool 52 can be used to manage a customer portfolio, including a set of multiple aircraft or a fleet of aircraft, utilizing various different SAF fuels. Particular elements of the CSA or the service program can include, but are not limited to, a price of the SAF, an amount of the SAF, the availability of credits or offsets for a particular SAF or region, or the particular location or region in which the aircraft can operate.

The decision tool 52 permits an end customer, such as an airline, to review, assess, and ultimately purchase SAFs for use by the end customer. The decision tool 52 can create or generate CSAs that include emissions information as an emissions score, which permits the end user to manage and mitigate climate risk and emissions, with an understanding of the total emissions required for use of a SAF for an aircraft, engine, flight, or plurality thereof. The CSAs can be tailored to certain governments or locales, permitting the end customer to take advantage of local credits for using SAFs or reducing emissions. In another example, the decision tool 52 can be used in a transactional setting. More specifically, the decision tool 52 or system 50 can provide available SAFs for purchase on a per-craft or per-flight basis. This permits management of emissions and climate risk by the end customer through using the decision tool 52 to purchase the SAF.

Additionally, the system 50 can be in the form of an evidence tool, used to generate reports utilizing the emissions score for SAFs. These generated reports can be used as evidence during certification or in order to receive tax or emissions credits from governments or local authorities. The system 50 can extrapolate this information across an entire fleet of aircraft, or among a business portfolio for air travel or SAF usage. In this way, the system 50 can oversee and manage emissions and associated risk for transactional end users, as well as providing evidence for available credits.

In another example, the system 50 can be utilized as a tool to measure and evidence overall reductions in emissions for the use of SAFs. The system 50 can record progress of decarbonization or emissions reductions, and can output or quantify emission reduction for a customer, airline, government, or locale. Such records can also be estimations extrapolated over time based on trends of fuel usage or cost.

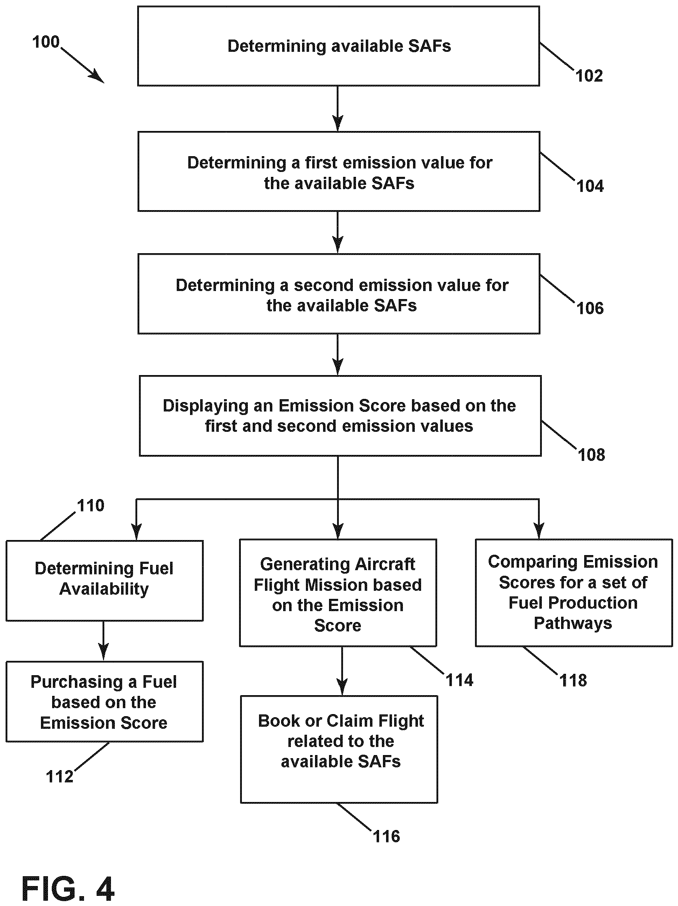

FIG. 4 is an example flow chart diagram of demonstrating a method 100 of selecting a sustainable aircraft fuel (SAF) for use in a flight between a departing airport and a destination airport, such as the airport 32 of FIG. 1, in accordance with various aspects described herein. Non-limiting aspects of the method 100 can include, at 102, determining, by a controller module 54 of the decision tool 52, available SAFs at or near the departing airport. Near can be within a threshold proximity, such that the SAF can be transported to the aircraft for use in the flight. SAFs can include any aircraft environment. SAFs can include a hydrogen-based fuel, a renewable diesel, a renewable gasoline, or a renewable natural gas, in non-limiting examples. SAFs Additionally, it is contemplated that renewable fuels can be utilized in non-aircraft environments such as ground-based, marine, or terrestrial systems or engines in non-limiting examples.

At 104, the method 100 can include determining a first emission value for each SAF of the available SAFs determined at 102. The first emission value corresponds to emissions associated with a production pathway for each SAF. The production pathway can include the lifecycle of the SAF from production to use, including the upstream portion 60 including feedstock production 70, feedstock processing 72, and SAF production 74, and the downstream portion 62 including transportation and logistics 80, blending or mixing 82, and distribution and storage 84. Determining the first emission value can further include determining current prices for the SAFs. Furthermore, determining the first emission value can include determining storage capacities for the available SAFs, or the availability of emissions credits associated with the available SAFs. Such emission credits can be production credits, consumption credits, offset credits, or carbon credits, in non-limiting examples. Additionally, the availability of other credits are contemplated, such as a carbon dioxide capture or forestry planting credits. Determining the first emission value can further include determining proximity to each SAF. Further yet, it should be appreciated that the production pathway for one SAF can receive move tax or carbon credits, for example, than another SAF, where the first SAF includes a relatively lower value for the first emission value. Integration of policies, regions, or governments which dictate how the credits are given is important to ensuring accuracy for the first emission value.

It should be understood that individual SAFs, mixes or blends thereof, feedstocks, processing systems, production processes, distribution avenues and strategies, storage, and ultimate use by the aircraft 20 all contribute to emissions resultant from the production and use of the SAF. In this way, individual fuels or mixes can have their own specific fuel pathway, where determining multiple production pathways for different SAFs, mixes, or otherwise is beneficial in comparison of such multiple fuel pathways to reduce fuel costs and emissions.

At 106, the method 100 can include determining a second emission value for each SAF of the available SAFs determined at 102. The second emission value corresponds to emissions associated with emissions for the flight from the departing airport to the destination airport. In one non-limiting example, determining the second emission value can include determining a current price or cost for the SAFs. In another non-limiting example, determining the second emission value can include determining a supply and/or a demand, which can be evaluated over time. It should be appreciated that the method 100 can measure the second emission value for an anticipated flight between the departing airport to the destination airport, or can be in real-time, during the flight, and can update the second emission value based upon real time flight information. Furthermore, the flight can be determined as a set of flights across a fleet of aircraft. Further yet, the set of flights can be separated into subsets of flights. Such subsets can be specific to a region or locale, for example. In one non-limiting example, modelling can be used to determine emissions between the departing airport and the destination airport. Such modelling or determining the second emission value for the set of flights can be over various operational periods for the set or subset of flights. Such operational periods can include takeoff, cruise, or land, in non-limiting examples. The second emission value can include, for example, departure 90, flight 92, and arrival 94, as well as any additional areas within the lifecycle of the SAF which can contribute to the emission score, such as certification 76. Furthermore, the second emission value can include supply and demand over time for the SAFs. Such a time can be a time period related to emissions credits, for example.

It should be further appreciated that determining the first and second emission values at 104, 106, can be an iterative process. Such an iterative process can include updating the available SAFs at the departing airport. For example, the first and second emission values, as well as the ultimate emission score, can be periodically updated to capture updates to fuel costs, availability, etc., It should be further appreciated that the emissions score can be updated for one or more SAFs in real time, such as periodically updating emission scores for SAFs at a destination airport during flight to that destination airport in order to prepare to fuel the aircraft for the next flight mission.

At 108, the method 100 can include displaying the emission score for the available SAFs. In non-limiting examples, displaying the emission score can include displaying the lowest emission score, the highest emission score, the emission score for the fuel with the lowest price, the emission score with the lowest emissions, or the emission score for the fuel with the lowest price of unit fuel per unit of emission. The emission score is representative of the first emission value and the second emission value for the available SAFs. Emissions represented in the emission score can include nitrous oxides, carbon monoxide, water vapor, or methane in non-limiting examples. Such a display can be within the aircraft 20, for example, such as a visual display within the cockpit or control area of the aircraft 20 permitting fuel purchase, such as by a pilot. In an alternative example, the display may be remote from the aircraft. For example, the airport 32 (FIG. 1), or other remote locale, may request an emission score for an aircraft executing a flight mission for that aircraft's SAF's specific fuel pathway. The airport 32 can utilize the emission score when making decisions across a fleet of multiple aircraft 20, such as when or where to purchase a particular SAF, or at what cost. In one example, the emission score can be representative of a carbon intensity. Furthermore, the method 100 can include determining a cost required to achieve a certain threshold carbon intensity, such as SAF content for a particular fuel. Further yet, the system 50 can determine a lowest carbon intensity for a particular price or availability of the SAF, which can be based on the emission score.

Displaying the emission score can further include displaying from whom to purchase the SAF, such as a distributor, airline, or government in non-limiting examples. Additionally, displaying the emission score can further include displaying where the purchase the at least one SAF, such as the particular airport 32 (FIG. 1) or area within the airport where SAF may be purchased. Furthermore, displaying the emission score can include displaying when the purchase will occur. For example, timeframe can vary the availability of SAFs, or related credits, and therefore, time of purchase can affect emission score. Further yet, displaying the emission score can include displaying an amount available or purchase, or requesting a purchase amount or volume. Displaying the emission score can further include displaying a current cost for the SAF, or an anticipated cost at the purchase time.

In another non-limiting aspect, the method 100 can include, at 110, determining an availability of the SAF. Prior to purchase of a SAF, the decision tool 52 can determine if any of the SAF is available for purchase. Additionally, the method 100 can determine proximity to the SAF available for purchase, as transport of that SAF or aircraft for provision can impact the emission score. Such an impact is reflected in the decision tool 52.

In yet another non-limiting aspect, the method 100 can include, at 112, purchasing a SAF based on the emission score. Purchasing can be executed by a user of the decision tool 52, such as a pilot fueling an aircraft prior to flight. Alternatively, an airline, business, or government remote from the aircraft 20 can purchases SAFs in bulk and stored for provision to aircraft, in anticipation of reducing costs or emissions with eventual use of the stored SAF. Purchase of the SAF can further include details specific to the SAF, such as the purchase price, the purchase amount, and the purchase time period. Furthermore, it is contemplated that purchasing the SAF can include executing an emissions management service contract. Additionally, purchasing the SAF can be accomplished on behalf of the pilot for a particular aircraft or flight mission. Such a purchase can be executed by a remote entity, for example, such as a fleet management system purchasing fuel for a particular aircraft within the fleet.

In yet another non-limiting aspect, the method 100 can include, at 114, generating an aircraft flight mission based on the emission score. Different emission scores can be generated for different flight missions, and can be done for multiple aircraft across a fleet. For example, fuel costs or requirements can be determined for different flight missions, and the fleet can be managed to take advantage of cost-offsets. If an emission or cost is too great, or exceeds a certain threshold, the flight mission can be rejected, changed, or updated in order to account for emissions determined by the emission score in order to mitigate emissions or costs. For example, fuel tankering can include storing a greater amount of fuel on an aircraft than needed for flight in order to avoid or reduce refueling, which can require time and increased fuel costs. Therefore, fuel location and availability, as well as cost, can be determinative in aircraft flight mission, in order to reduce emission score of subsequent flights for the same or separate aircraft. A fleet of aircraft includes multiple aircraft operating simultaneously in real time. Managing flight missions for multiple aircraft can provide for reducing emissions score by changing one or more flight missions based upon the emission score. The method 100 at 114 can further include tracking one or more flights for an aircraft or a fleet of aircraft. The generated flight mission can be for a single aircraft, or for multiple aircraft such as a fleet. Tracking flights can provide for real-time updates to SAF costs and availabilities as flights change over time.

In yet another non-limiting aspect, the method 100 can include, at 116, booking or claiming a flight that relates to the available SAFs. The decision tool 52 can further include upcoming flights, and determine the emission score for the available SAFs along those upcoming flights. Therefore, the method 100 and decision tool 52 permits a user to review emissions scores for different SAFs as they can relate to flights, permitting a pilot or airline to schedule flights relating to the use of SAFs, and their related emissions scores.

In yet another non-limiting aspect, the method 100 can include, at 118, comparing emission scores for the available SAFs. The decision tool 52 can model multiple emission scores for multiple available SAFs. Modeling multiple emission scores permits comparison of those scores among the available SAFs. Such comparison can permit a user to make decisions with the decision tool 52 on which SAFs to purchase, store, or utilize, in order to reduce costs and emissions, or to increase or take advantage of emission credit usage, value, or offsets. It is further contemplated that the method 100 can be periodically updated with the emissions score for the SAFs, as the score can change over time, and periodic updates can be used to purchase or utilize SAFs in real time.

Non-limiting aspects of the method 100 can further include, modeling, by the controller module 54, an emission score for the SAF or the fuel pathway. The decision tool 52 can utilize data or information gathered by the system 50 in order to generate an emission score based upon the particular SAF and fuel pathway. The emission score is representative of an amount of emissions produced by utilizing a SAF, across the fuel's lifecycle, and produced along the fuel pathway. The emission score can further be representative of an emission and/or a monetary cost for utilizing the SAF. For example, the emission score can include the price of the SAF. With these costs or with the emission score, a user can use the decision tool 52 to determine which SAFs to purchase at what time or over which time period, thereby reducing cost and emissions. The emission score can further include a storage capacity. Such a storage capacity can be particular to a SAF, or a fuel pathway, or across multiple SAFs for multiple fuel pathways. Storage for some SAFs requires different consideration than other SAFs, and such storage may include different costs, systems, or capacities. Such capacities can include a storage capacity for a particular aircraft, a capacity of a fleet of aircraft, or subset thereof, or a storage capacity for storing a SAF.

The emission score can further include determining the availability of emission credits, such as carbon credits. The emission credits can be specific to a SAF, government, or region, for example, where the potential to utilize or sell offsetting emission credits can impact the emission score. The emission score can further model emissions for a flight, or fleet of aircraft, in real time, and the decision tool 52 can provide updated decision information for purchase, sale, storage, or other use of the SAF. In another example, the emission score can include a carbon intensity. The emission score can include potential carbon offsets, such as carbon dioxide capture or forestry planting. In yet another example, the emission score can model supply and demand for a SAF over a time period, in order to determine the emission score for fuel pathways based upon anticipated demand for the SAF, or resultant availability thereof during the time period. Such a time period can be tailored to an emissions credit, for example. Additionally, the emission score can consider emission credits which are outside of the fuel pathway for the particular SAF. In yet another example, modeling the emission score in real time can further consider aircraft route, where such a route can determine an emission score for the fuel pathway, such as environment, weather, or the availability of emission credits locally. In another non-limiting example, modelling can include an off-line determination, utilizing historic flight data or SAF data used to determine an emission score expected based upon the flight mission, flight path, weather, or other commonalities based upon the historic data. Additionally, real time modeling of the emission score can include the operational state of the engine 22 burning the SAF, such as at takeoff, climb, cruise, descend, or land. Further still, it is contemplated that the emission score can be periodically updated during the flight of the aircraft 20, as flight requirements can vary fuel needs, and therefore, the emission score.

The sequence depicted is for illustrative purposes only and is not meant to limit the method 100 in any way as it is understood that the portions of the method can proceed in a different logical order, additional or intervening portions can be included, or described portions of the method can be divided into multiple portions, or described portions of the method can be omitted without detracting from the described method.

Many other possible aspects and configurations in addition to that shown in the above figures are contemplated by the present disclosure. The aspects disclosed herein provide an aircraft utilizing a SAF that has an emission score. The technical effect is that the emission score and above-described aspects enable the design, estimation, prediction, enablement, and implementation of determining the financial and environmental propriety of purchasing or using a SAF across the fuel's full lifecycle. One advantage that can be realized in the above aspects is that the above-described aspects enable intelligent utilization for fuel demands based on several factors including emissions.

Another advantage to the aspects of the disclosure can provide a decision tool for real-time decisions for fuel usage, considering aircraft currently in flight. Yet another advantage can include taking into consideration the future travel plan of a particular vehicle or flight plan, and making recommendations for fuel costs or emissions for those future travel plans. Yet another advantage to the disclosure is that the decision tool is adaptable across multiple systems, platforms, fuels, and vehicles. Yet another advantage includes the ability to project jet fuel prices or SAF prices to estimate aircraft or airline operating costs, permitting optimization of fuel management for a single vehicle or across an entire fleet. Yet another advantage is the ability to measure regional progress or credit usage across a global, industry-wide decarbonization effort. Such measured progress or credit usage can inform policy developments or other environmental services related to the SAFs, their production, or their use.

To the extent one or more structures provided herein can be known in the art, it should be appreciated that the present disclosure can include combinations of structures not previously known to combine, at least for reasons based in part on conflicting benefits versus losses, desired modes of operation, or other forms of teaching away in the art.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects of the disclosure are provided by the subject matter of the following clauses:

A method of utilizing a sustainable aircraft fuel (SAF) for use in a flight for an aircraft between a departing airport and a destination airport, the method comprising: determining available SAFs at the departing airport usable by the aircraft; determining a first emission value for each SAF of the available SAFs, with the first emission value corresponding to emissions associated with a production pathway of each SAF of the available SAFs; determining a second emission value for each SAF of the available SAFs, where the second emission value is associated with emissions for the flight from the departing airport to the destination airport; based on the first and second emission values, generating an emission score for the available SAFs; and initiating fueling the aircraft with a selected SAF of the available SAFs, based on the emission score, for completion of the flight between the departing airport and the destination airport.

The method of any preceding clause further comprising purchasing the selected SAF of the available SAFs.

The method of any preceding clause further comprising burning the selected SAF fueling the aircraft to complete the flight between the departing airport and the destination airport.

The method of any preceding clause further comprising generating a service agreement for purchase of the at least one SAF fueling the aircraft.

The method of any preceding clause further comprising selecting at least one SAF of the available SAFs based upon the emission score.

The method of any preceding clause wherein selecting at least one SAF further comprises the selecting the emission score with the lowest emissions.

The method of any preceding clause wherein selecting at least one SAF of the available SAFs further comprises the selecting the lowest emission score.

The method of any preceding clause further comprising reducing a cost of fueling the aircraft by fueling the aircraft with the selected SAF of the available SAFs.

The method of any preceding clause wherein determining the second emission value further comprises determining a current price of the SAF.

The method of any preceding clause wherein the production pathway comprises an upstream portion and a downstream portion.

The method of any preceding clause wherein determining the first emission value for the upstream portion further comprises determining emissions generated by feedstock production, feedstock processing, and fuel production.

The method of any preceding clause wherein determining the first emission value for the downstream portion further comprises determining emissions generated by fuel distribution, fuel blending, and fuel storage.

The method of any preceding clause wherein determining the second emission value includes determining the emissions generated by departure, flight, and arrival between the departing airport and the destination airport.

The method of any preceding clause further comprising determining a storage capacity for the available SAFs.

The method of any preceding clause wherein determining capacity includes determining one of an aircraft capacity, a fleet capacity, or a storage capacity.

The method of any preceding clause wherein determining the second emission value further comprises modelling carbon dioxide emissions for the flight from the departing airport to the destination airport.

The method of any preceding clause wherein determining the second emission value further comprises determining emissions for the flight across a fleet of aircraft having a set of flights.

The method of any preceding clause wherein determining the second emission value further comprises determining emissions across a subset of flights of the set of flights.

The method of any preceding clause wherein determining the second emission value further comprises determining emissions over various operational periods for the set of flights.

The method of any preceding clause further comprising tracking the flight across a fleet of aircraft having a set of flights.

The method of any preceding clause further comprising modelling usage of the at least one SAF over various operation periods.

The method of any preceding clause further comprising determining an availability of emission credits.

The method of any preceding clause wherein determining the availability of emission credits is specific to region or government.

The method of any preceding clause wherein determining the availability of emission credits relates to an amount of the available SAFs.

The method of any preceding clause wherein the emission credits include at least one of production credits, consumption credits, offset credits, or carbon credits.

The method of any preceding clause wherein determining the second emission value further comprises determining emissions of flight between the departing airport and the destination airport in real time.

The method of any preceding clause wherein determining the second emission value includes determining aircraft route.

The method of any preceding clause wherein determining the second emission value includes determining an operational state of an engine burning the SAF.

The method of any preceding clause wherein determining the second emission value further comprises determining a supply and a demand for the SAF over a time period.

The method of any preceding clause wherein the time period is based upon an emissions credit.

The method of any preceding clause further comprising determining an availability of a carbon credit or a carbon offset related to the available SAFs.

The method of any preceding clause wherein determining the availability of the carbon credit or carbon offset further comprises performing a cost-benefit analysis based upon the emission score over the time period.

The method of any preceding clause further comprising purchasing a SAF of the available SAFs based on the emission score.

The method of any preceding clause wherein determining available SAFs further includes determining a proximity to each SAF of the available SAFs.

The method of any preceding clause further comprising changing an aircraft flight mission between the departing airport and the destination airport based on the emission score.

The method of any preceding clause further comprising comparing emission scores for each SAF of the available SAFs.

The method of any preceding clause wherein comparing the emission scores for each SAF further includes comparing the availability of emission credits for each SAF, a minimum fuel price for each SAF, or a minimum emission score for each SAF.

The method of any preceding clause wherein displaying the emission score further comprises permitting a user to purchase at least one SAF of the available SAFs.

The method of any preceding clause wherein displaying the emission score for each SAF further includes displaying the highest emission score for the available SAFs.

The method of any preceding clause further comprising periodically updating the emission score for each available SAF during flight between the departing airport and the destination airport.

The method of any preceding clause wherein the emission score is representative of a carbon intensity.

The method of any preceding clause further comprising determining a cost for the at least one SAF in order to achieve a threshold carbon intensity.

The method of any preceding clause wherein determining the emission score further comprises determining at least one of carbon dioxide capture or forestry planting.

The method of any preceding clause further comprising determining a lowest carbon intensity for at least one of a specified cost for the at least one SAF or an availability of the at least one SAF.

The method of any preceding clause wherein displaying the emission score further comprises displaying at least one of from whom to purchase the at least one SAF, where to purchase the at least one SAF, how much of the at least one SAF to purchase, when will the purchase of the at least one SAF occur, or how much the at least one SAF costs.

The method of any preceding clause further comprising purchasing the at least one SAF.

The method of any preceding clause further comprising executing an emissions management service contract.

The method of any preceding clause wherein purchasing the at least one SAF includes purchasing the at least one SAF on behalf of the pilot.

The method of any preceding clause further comprising updating the available SAFs at the departing airport.

The method of any preceding clause wherein the at least one SAF is one of a hydrogen-based fuel, a renewable diesel, a renewable gasoline, or renewable natural gas.

The method of any preceding clause wherein the emissions include at least one of nitrous oxides, carbon monoxide, water vapor, or methane.

A decision tool for selecting a sustainable aircraft fuel (SAF) for use in a flight between a departing airport and a destination airport, the decision tool comprising: a controller module configured to receive data related to the SAF, wherein the controller module is configured use received data to: determine available SAFs at the departing airport; determine a first emission value for each SAF of the available SAFs, with the first emission value corresponding to emissions associated with a production pathway of each SAF of the available SAFs; determine a second emission value for each SAF of the available SAFs, where the second emission value is associated with emissions for the flight from the departing airport to the destination airport; generate an emission score for at least one SAF of the available SAFs based on the first emission value and second emission value; and generate a contractual service agreement for purchase of the at least one SAF of the available SAFs.

The decision tool of any preceding clause wherein the controller module is further configured to determine a current price of the available SAFs.

The decision tool of any preceding clause wherein the controller module is further configured to purchase the at least one SAF of the available SAFs by executing the contractual service agreement at the current price.

The decision tool of any preceding clause wherein the controller module is further configured to determine a storage capacity for the available SAFs.

The decision tool of any preceding clause wherein the controller module is further configured to determine the availability of emission credits relating to the available SAFs.

The decision tool of any preceding clause wherein the controller module is further configured to determine emissions of flight between the departing airport and the destination airport in real time.

The decision tool of any preceding clause wherein the controller module is further configured to purchase at least one SAF of the available SAFs based on the contractual service agreement.

The decision tool of any preceding clause wherein the controller module is further configured to permit a user to execute the contractual service agreement.

## Claims

1. A method (100) of utilizing a sustainable aircraft fuel (SAF) for use in a flight (92) for an aircraft between a departing airport (32) and a destination airport (32), the method (100) comprising:
determining available SAFs at the departing airport (32) usable by the aircraft;
determining a first emission value for each SAF of the available SAFs, with the first emission value corresponding to emissions associated with a production pathway of each SAF of the available SAFs;
determining a second emission value for each SAF of the available SAFs, where the second emission value is associated with emissions for the flight (92) from the departing airport (32) to the destination airport (32);
based on the first and second emission values, generating an emission score for the available SAFs; and
initiating fueling the aircraft with a selected SAF of the available SAFs, based on the emission score, for completion of the flight (92) between the departing airport (32) and the destination airport (32).

2. The method (100) of claim 1 further comprising purchasing the selected SAF of the available SAFs.

3. The method (100) of any of the preceding claims and further comprising burning the selected SAF fueling the aircraft to complete the flight (92) between the departing airport (32) and the destination airport (32).

4. The method (100) of any of the preceding claims and further comprising generating a service agreement for purchase of the selected SAF fueling the aircraft.

5. The method (100) of any of the preceding claims and further comprising selecting at least one SAF of the available SAFs based upon the emission score.

6. The method (100) of claim 5 wherein selecting at least one SAF of the available SAFs further comprises the selecting the lowest emission score.

7. The method (100) of any of the preceding claims and further comprising reducing a cost of fueling the aircraft by fueling the aircraft with the selected SAF of the available SAFs.

8. The method (100) of any of the preceding claims wherein the production pathway comprises an upstream portion (60, 62) and a downstream portion (60, 62).

9. The method (100) of claim 8 wherein determining the first emission value for the upstream portion (60, 62) further comprises determining emissions generated by feedstock production (70), feedstock processing (40) (72), and fuel production.

10. The method (100) of claim 9 wherein determining the first emission value for the downstream portion (60, 62) further comprises determining emissions generated by fuel distribution, fuel blending, and fuel storage (84).

11. The method (100) of claim 10 wherein determining the second emission value includes determining the emissions generated by a departure (90), the flight (92), and an arrival (94) between the departing airport (32) and the destination airport (32).

12. The method (100) of any of the preceding claims and further comprising determining an availability of emission credits.

13. The method (100) of any of the preceding claims wherein determining the available SAFs further includes determining a proximity to each SAF of the available SAFs.

14. The method (100) of any of the preceding claims and further comprising comparing the emission score for each SAF of the available SAFs.

15. The method (100) of any of the preceding claims and further comprising generating a contractual service agreement for purchase of the at least one SAF of the available SAFs.
